(19)

Europäisches Patentamt
European Patent Office
Office européen des brevets

(11)  **EP 4 582 345 A1**

(12)  **EUROPEAN PATENT APPLICATION**
published in accordance with Art. 153(4) EPC

(43)  Date of publication:
09.07.2025  Bulletin 2025/28

(21)  Application number: 23859965.8

(22)  Date of filing: 03.08.2023

(51)  International Patent Classification (IPC):
*B64D 45/00* (2006.01)    *B64C 39/02* (2023.01)
*B64D 17/80* (2006.01)    *B64U 10/14* (2023.01)
*B64U 70/83* (2023.01)    *G05D 1/20* (2024.01)

(52)  Cooperative Patent Classification (CPC):
**B64C 39/02; B64D 17/80; B64D 45/00;
B64U 10/14; B64U 70/83; G05D 1/46**

(86)  International application number:
**PCT/JP2023/028429**

(87)  International publication number:
**WO 2024/048196 (07.03.2024 Gazette 2024/10)**

(84)  Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30)  Priority:  29.08.2022  JP 2022136175

(71)  Applicant: **Nippon Kayaku Kabushiki Kaisha
Tokyo 100-0005 (JP)**

(72)  Inventors:
• **YOSHIOKA, Takuto
Himeji-shi, Hyogo 679-2123 (JP)**
• **HATANAKA, Tomohiro
Himeji-shi, Hyogo 679-2123 (JP)**
• **KAI, Yudai
Himeji-shi, Hyogo 679-2123 (JP)**

(74)  Representative: **TBK
Bavariaring 4-6
80336 München (DE)**

(54)  **FLYING BODY AND METHOD FOR CONTROLLING FLYING BODY**

(57)  An aerial vehicle includes a sensor device that detects a flight state of the aerial vehicle, an ejection apparatus that includes a parachute and can eject the parachute, and a controller that determines whether or not the parachute should be ejected based on a degree of deviation of the flight state from a reference range determined for the flight state and a duration for which a state of deviation equal to or more than the degree of deviation lasts.

FIG.11

```
START
   │
   ▼
OBTAIN RESULTANT ACCELERATION P                                    S1
   │
   ▼
SUBSTITUTE RESULTANT ACCELERATION P INTO                           S2
FUNCTION Va(x) AND OBTAIN VALUE (Va(P)) OF FUNCTION
   │
   ▼
OBTAIN DURATION Tp OF STATE IN WHICH RESULTANT                     S3
ACCELERATION IS NOT HIGHER THAN RESULTANT
ACCELERATION P
   │
   ▼
SUBSTITUTE DURATION Tp INTO FUNCTION Vb(t) AND                     S4
OBTAIN VALUE (Vb(Tp)) OF FUNCTION
   │
   ▼
CALCULATE SUM OF VALUE Va(Tp) OF FUNCTION AND                      S5
VALUE Vb(Tp) OF FUNCTION
   │
   ▼
HAS SUM EXCEEDED            ─── NO                                 S6
THRESHOLD VALUE "1"?
   │ YES
   ▼
EJECT PARACHUTE                                                    S7
   │
   ▼
END
```

EP 4 582 345 A1

**Description**

TECHNICAL FIELD

The present disclosure relates to an aerial vehicle and a method of controlling an aerial vehicle.

BACKGROUND ART

Various manned aircrafts and various unmanned aircrafts have conventionally been known as aerial vehicles. An unmanned aircraft that executes a scenario of descent with a parachute when a flight state deviates from a reference range (which is also referred to as a "flight envelope") determined for the flight state has also been known.

For example, US Patent Publication No. 2017/0106986A1 (PTL 1) discloses an unmanned aircraft that executes such a descent scenario. The unmanned aircraft in PTL 1 ejects a parachute on condition that an altitude is higher than a threshold value (20 feet), for example, when an inclination of the unmanned aircraft is larger than a threshold value (25 degrees) and a duration of such an inclined state is longer than a threshold value (2 seconds).

CITATION LIST

PATENT LITERATURE

PTL 1: US Patent Publication No. 2017/0106986A1

SUMMARY OF INVENTION

TECHNICAL PROBLEM

According to PTL 1, even when a flight in which the inclination is slightly smaller than the threshold value (for example, a flight in which the inclination is 24 degrees) lasts for a time period (for example, 5 seconds) sufficiently longer than the threshold value of the duration, the descent scenario is not started. In addition, even when a flight in which the inclination greatly exceeds the threshold value of the inclination lasts for a time period (for example, 1.5 second) shorter than the threshold value of the duration, the descent scenario is not started. Therefore, in PTL 1, the unmanned aircraft may crash during that time period. PTL 1 is thus not necessarily concluded as executing at appropriate timing, the descent scenario including ejection of the parachute.

The present disclosure was made in view of the problems above, and provides an aerial vehicle and a method of controlling an aerial vehicle that enable ejection of a parachute at appropriate timing.

SOLUTION TO PROBLEM

According to one aspect of the present disclosure, an aerial vehicle includes a sensor device that detects a flight state of the aerial vehicle, an ejection apparatus that includes a parachute and can eject the parachute, and a controller that determines whether the parachute should be ejected based on a degree of deviation of the flight state from a reference range determined for the flight state and a duration for which a state of deviation equal to or more than the degree of deviation lasts.

According to another aspect of the present disclosure, a method of controlling an aerial vehicle that can eject a parachute includes detecting a flight state of the aerial vehicle and determining whether the parachute should be ejected based on a degree of deviation of the flight state from a reference range determined for the flight state and a duration for which a state of deviation equal to or more than the degree of deviation lasts.

ADVANTAGEOUS EFFECTS OF INVENTION

According to the present disclosure, the parachute can be ejected at appropriate timing.

BRIEF DESCRIPTION OF DRAWINGS

Fig. 1 is a diagram showing a state that a drone is flying.
Fig. 2 is a diagram showing a state of descent of the drone with a parachute having been ejected.

Fig. 3 is a block diagram for illustrating a hardware configuration of the drone.
Fig. 4 is a diagram showing an exemplary configuration of a trigger apparatus.
Fig. 5 is a front view of a remote controller for an operator to control a drone.
Fig. 6 is a diagram for illustrating setting of a threshold value of a resultant acceleration.
Fig. 7 is a diagram for illustrating setting of a threshold value of an angular velocity.
Fig. 8 is a diagram for illustrating setting of a threshold value of an attitude angle.
Fig. 9 is a diagram showing a function.
Fig. 10 is a diagram showing a function.
Fig. 11 is a flowchart for illustrating a flow of processing.
Fig. 12 is a diagram showing a function.
Fig. 13 is a diagram showing a function.
Fig. 14 is a diagram showing a data table.
Fig. 15 is a flowchart for illustrating a flow of processing.

## DESCRIPTION OF EMBODIMENTS

An embodiment according to the present invention will be described below with reference to the drawings. In the description below, the same components and constituent elements have the same reference characters allotted and their labels and functions are also the same. Therefore, detailed description thereof will not be repeated.

An unmanned aircraft will be described below by way of example of an aerial vehicle. Specifically, a drone as the unmanned aircraft will be described by way of example. More specifically, a drone with rotary wings will be described by way of example. The present disclosure is also applicable to various manned aircrafts (other examples of the aerial vehicle) such as a "flying car."

[First Embodiment]

<A. Overview of Drone>

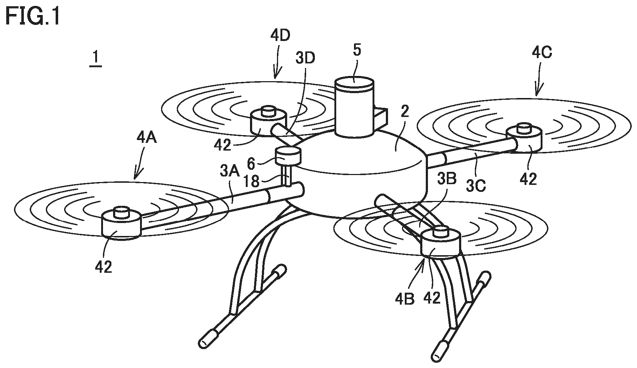

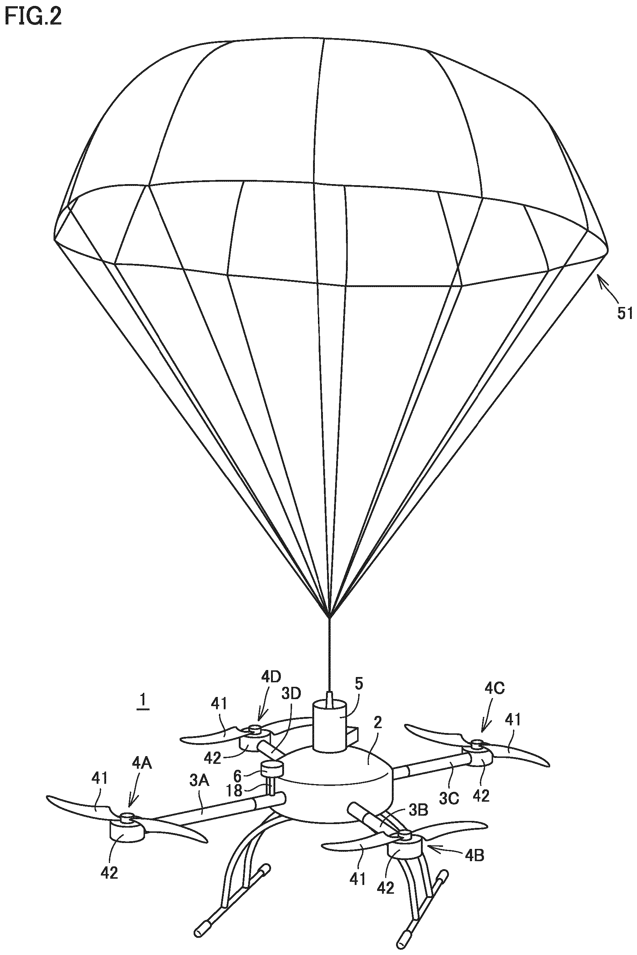

A drone according to the present embodiment is adapted to automatic control and manual control by an operator (remote control with the use of a remote controller). Fig. 1 is a diagram showing a state that a drone is flying. Fig. 2 is a diagram showing a state of descent of the drone with a parachute having been ejected.

As shown in Figs. 1 and 2, a drone 1 includes a main body 2, four arms 3A, 3B, 3C, and 3D, four propulsive mechanisms 4A, 4B, 4C, and 4D, an ejection apparatus 5, a communication unit 6, and a support member 18. Each of propulsive mechanisms 4A, 4B, 4C, and 4D includes a propeller 41 (see Fig. 2) and a motor 42.

For the sake of convenience of description, any one arm of arms 3A, 3B, 3C, and 3D will also be referred to as an "arm 3" below. Similarly, any one propulsive mechanism of propulsive mechanisms 4A, 4B, 4C, and 4D will also be referred to as a "propulsive mechanism 4."

Arm 3 is attached to main body 2. Arm 3 has a base end and a tip end. Arm 3 has the base end attached to main body 2. In the present example, arm 3 extends from a side surface of main body 2.

Propulsive mechanism 4 is attached to the tip end of arm 3. Motor 42 is attached to the tip end of arm 3. Propeller 41 is attached to a rotation shaft (not shown) of motor 42.

In the present example, ejection apparatus 5 is attached to an upper surface (a top surface) of main body 2. A position of attachment of ejection apparatus 5 is not limited as such, and for example, a side surface of main body 2 or a bottom surface of main body 2 may be applicable.

A parachute 51 is accommodated in ejection apparatus 5. Ejection apparatus 5 ejects parachute 51 as shown in Fig. 2 when a flight state of drone 1 satisfies a predetermined condition. Ejection apparatus 5 senses drop or the like of drone 1 and instantaneously expands parachute 51 by activating a gas generator contained in ejection apparatus 5. An explosive gas generator (pyrotechnic) or a non-explosive gas generator such as a canister type gas generator may be employed as the gas generator.

Support member 18 extends upward from a portion of connection between arm 3 and main body 2 in the present example. Support member 18 is a hollow pipe. In the inside of support member 18, a wire for communication unit 6 passes. In the present example, communication unit 6 is supported by support member 18 as being located above main body 2.

Though drone 1 including four arms 3 and four propulsive mechanisms 4 is exemplified, the number of arms and the number of propulsive mechanisms are not limited as such.

<B. Hardware Configuration and Performed Processing>

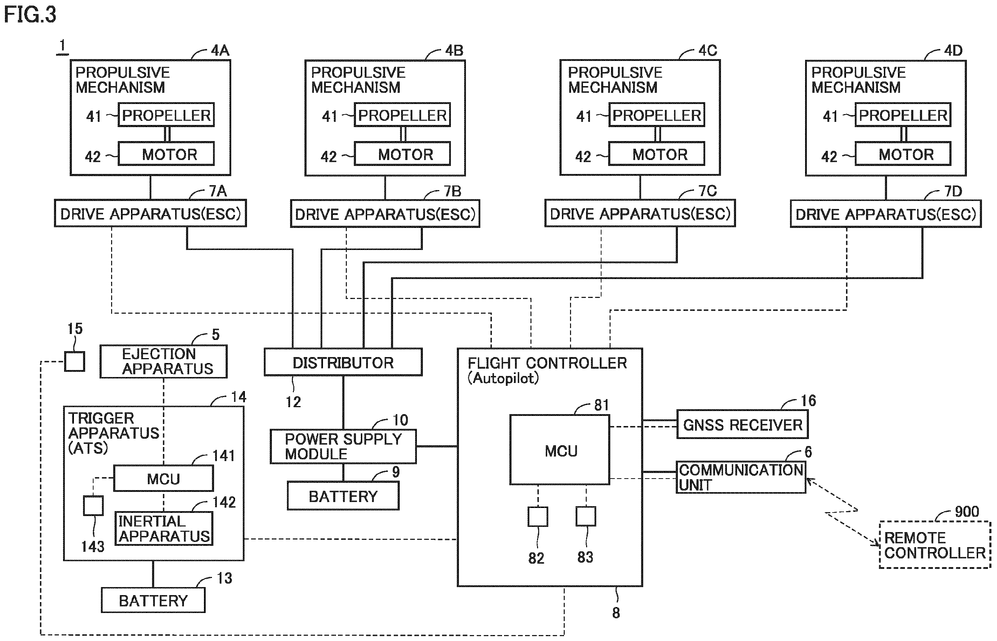

Fig. 3 is a block diagram for illustrating a hardware configuration of drone 1. In Fig. 3, a main power path is shown with a solid line and a main signal path is shown with a dashed line.

As shown in Fig. 3, drone 1 includes, in addition to propulsive mechanisms 4A, 4B, 4C, and 4D, ejection apparatus 5, and communication unit 6 described above, drive apparatuses (electronic speed controllers (ESCs)) 7A, 7B, 7C, and 7D, a flight controller (an autopilot) 8, a battery 9, a power supply module 10, a distributor 12, a battery 13, a trigger apparatus (auto trigger system (ATS)) 14, a sensor 15, and a global navigation satellite system (GNSS) receiver 16. For the sake of convenience of description, any one drive apparatus of drive apparatuses 7A, 7B, 7C, and 7D will also be referred to as a "drive apparatus 7" below.

As described above, propulsive mechanism 4 includes propeller 41 and motor 42. Drive apparatus 7 includes a micro controller unit (MCU) and a current driver which are not shown.

Flight controller 8 includes an MCU 81, an inertial apparatus 82, and a pressure altimeter 83. MCU 81 is communicatively connected to inertial apparatus 82 and pressure altimeter 83.

Trigger apparatus 14 includes an MCU 141, an inertial apparatus 142, and a pressure altimeter 143. In the present example, inertial apparatus 142 detects an acceleration, an angular velocity, an attitude angle, and a velocity of drone 1. Details of inertial apparatus 142 will be described later. Pressure altimeter 143 periodically measures an altitude (an altitude from the ground level and the sea level) of drone 1.

MCUs 81 and 141 each specifically include a central processing unit (CPU), a memory such as a read only memory (ROM) and a random access memory (RAM), and an input/output (I/O) circuit which are not shown. A program and data are stored in the memory. For example, data indicating a flight route of drone 1 is stored in the memory of MUC 81.

Communication unit 6 is an apparatus for communication with a terrestrial apparatus. Communication unit 6 includes a wireless module and a long term evolution (LTE) module which are not shown.

The wireless module is a communication module for communication with a remote controller 900 which is one of terrestrial apparatuses. Communication between the wireless module and remote controller 900 is used in manual control of drone 1 within a range viewable by the operator. Therefore, this communication is real-time.

The LTE module is a communication module for communication with a terrestrial control station with a base station (not shown) being interposed. Communication between the LTE module and the terrestrial control station which is one of the terrestrial apparatuses is used during a flight of drone 1 over several kilometers by automatic control.

Battery 9 is a storage battery (secondary battery). Battery 9 is connected to power supply module 10. Power supply module 10 supplies electric power from battery 9 to flight controller 8 and communication unit 6 through a prescribed power path. In the present example, power is fed to communication unit 6 through flight controller 8. Power supply module 10 supplies electric power from battery 9 to distributor 12 through a prescribed power path.

Distributor 12 distributes supplied electric power to each of four drive apparatuses 7. Distributor 12 allows electric power supplied through a power path R2 to be supplied to each of four drive apparatuses 7. Specifically, distributor 12 allows electric power to be supplied to the current driver (not shown) of each of four drive apparatuses 7.

Drive apparatus 7 is communicatively connected to flight controller 8. Drive apparatus 7 drives corresponding propulsive mechanism 4 based on a command from flight controller 8. Specifically, drive apparatus 7 adjusts propulsive force of corresponding propulsive mechanism 4 based on a command from flight controller 8. Specifically, drive apparatus 7A adjusts propulsive force of corresponding propulsive mechanism 4A. Similarly, drive apparatuses 7B, 7C, and 7D adjust propulsive force of respective propulsive mechanisms 4B, 4C, and 4D. Drive apparatus 7 thus functions as a control device that controls propulsive mechanism 4.

Specifically, the MUC (not shown) of drive apparatus 7 receives a command from MUC 81 of flight controller 8. The MCU of drive apparatus 7 controls a current fed by the current driver of drive apparatus 7 to the coil (not shown) of motor 42 based on the command. By such control of the current to be fed to the coil, a rotation speed of motor 42 is controlled. A speed of rotation of propeller 41 can thus be controlled.

GNSS receiver 16 and communication unit 6 are communicatively connected to MCU 81 of flight controller 8. GNSS receiver 16 and communication unit 6 receive supply of electric power from flight controller 8. GNSS receiver 16 and communication unit 6 operate with electric power from battery 9.

GNSS receiver 16 receives radio waves emitted from a plurality of positioning satellites (not shown) and obtains the current position of drone 1 based on received radio waves. GNSS receiver 16 periodically sends information indicating the current position to flight controller 8. Specifically, GNSS receiver 16 periodically sends information on a latitude and a longitude of drone 1 as position information to MCU 81.

Inertial apparatus 82 periodically measures the angular velocity and the acceleration of drone 1 in a three-dimensional space. For example, any of an inertial measurement unit (IMU), an inertial navigation unit (INU), an inertial reference unit (IRU), an inertial guidance unit (IGU), and an attitude heading reference system (AHRS) can be employed as inertial apparatus 82. Pressure altimeter 83 periodically measures the altitude from the ground level and the sea level similarly to pressure altimeter 143.

Flight controller 8 controls flight of drone 1. Flight controller 8 realizes automatic control and manual control by a remote controller operation by the operator.

In automatic control, flight controller 8 controls flight of drone 1 based on a predetermined flight route. Specifically, MCU 81 of flight controller 8 implements autonomous flight of drone 1 based on the current position obtained by GNSS receiver 16 or the like, a result of detection by inertial apparatus 82, and a result of detection (altitude) by pressure altimeter 83. Flight controller 8 can transmit information on the current position of drone 1 through the LTE module described above.

Flight controller 8 transmits the information on the current position of drone 1 to the terrestrial control station through the LTE module, based on occurrence of predetermined abnormality in drone 1.

Ejection apparatus 5 contains parachute 51. Ejection apparatus 5 can eject parachute 51 in any of automatic control and manual control.

Trigger apparatus 14 is fed with power from battery 13. Trigger apparatus 14 activates ejection apparatus 5 when a flight state satisfies a predetermined condition. Specifically, MCU 141 sends the above-described command to ejection apparatus 5, so that ejection apparatus 5 ejects parachute 51 to the outside.

More specifically, when the flight state satisfies the predetermined condition, trigger apparatus 14 sends a prescribed signal to flight controller 8. When flight controller 8 receives the prescribed signal, it stops rotation of propeller 41. In other words, flight controller 8 forcibly stops the flight. When a prescribed time has elapsed since trigger apparatus 14 sent the prescribed signal, trigger apparatus 14 sends a command to eject parachute 51 to ejection apparatus 5. Thus, after propeller 41 stops. parachute 51 is ejected. Entanglement of parachute 51 with propeller 41 can thus be prevented.

Sensor 15 detects whether or not ejection apparatus 5 has been activated. Sensor 15 is communicatively connected to flight controller 8. Flight controller 8 transmits through the LTE module to the terrestrial control station, the fact of forced stop of the flight and the result of detection by sensor 15.

When MCU 81 determines that drone 1 has strayed off a flight route, it may send to trigger apparatus 14, a command to activate ejection apparatus 5. In this case, MCU 141 of trigger apparatus 14 activates ejection apparatus 5 based on the command.

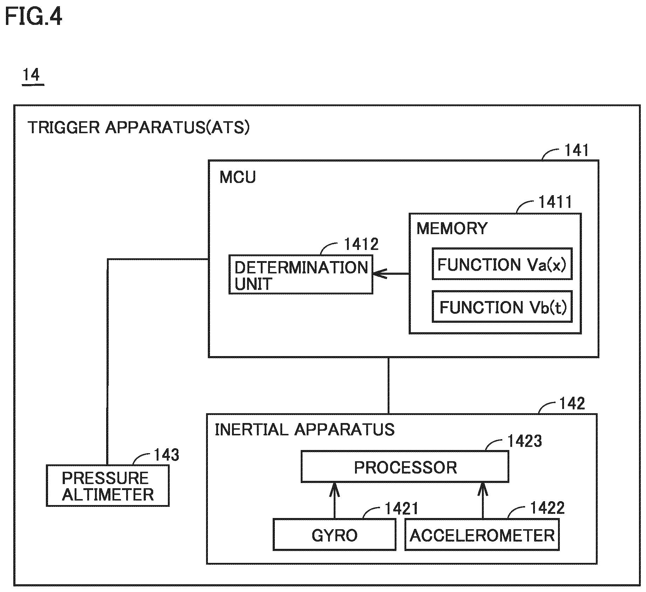

Fig. 4 is a diagram showing an exemplary configuration of trigger apparatus 14. As shown in Fig. 4, inertial apparatus 142 includes a gyro 1421, an accelerometer 1422, and a processor 1423. Specifically, inertial apparatus 142 includes three gyros and three accelerometers for axes (an X axis, a Y axis, and a Z axis) of a three-dimensional rectangular coordinate system. Processor 1423 may be provided in MCU 141. Processor 1423 should only be in trigger apparatus 14.

Specifically, any of an inertial measurement unit (IMU), an inertial navigation unit (INU), an inertial reference unit (IRU), an inertial guidance unit (IGU), and an attitude heading reference system (AHRS) can be employed as inertial apparatus 142 similarly to inertial apparatus 82.

In the present example, a forward travel direction of drone 1 is defined as a positive direction along the X axis and a rearward travel direction of drone 1 is defined as a negative direction along the X axis. A left movement direction of drone 1 is defined as the positive direction along the Y axis and a right movement direction of drone 1 is defined as the negative direction along the Y axis.

Gyro 1421 detects a rotational motion of drone 1. Accelerometer 1422 detects a translation motion of drone 1 along each axial direction. Specifically, in the present example, gyro 1421 outputs angular velocities around the three axes to processor 1423. Accelerometer 1422 outputs the accelerations in directions along the three axes to processor 1423.

Processor 1423 calculates at least angular velocities around the three axes, accelerations in the directions along the three axes, attitude angles (a roll angle, a pitch angle, and a yaw angle (direction angles)), a velocity, and a position. The angular velocity around the X axis among the angular velocities around the three axes is also referred to as a "roll angular velocity" below. The angular velocity around the Y axis among the angular velocities around the three axes is also referred to as a "pitch angular velocity." The angular velocity around the Z axis among the angular velocities around the three axes is also referred to as a "yaw angular velocity."

MCU 141 includes a memory 1411 and a determination unit 1412. A function Va(x) and a function Vb(t) are stored in memory 1411. Details of function Va(x) and function Vb(t) will be described later. Determination unit 1412 of MCU 141 determines whether or not an operation to eject parachute 51 is required based on function Va(x) and function Vb(t) stored in memory 1411. Details of such determination processing will also be described later.

Though a set of functions consisting of two functions of function Va(x) and function Vb(t) is shown above, specifically, sets of functions in number in accordance with types of flight envelopes which will be described later are stored in memory 1411.

<C. Remote Controller>

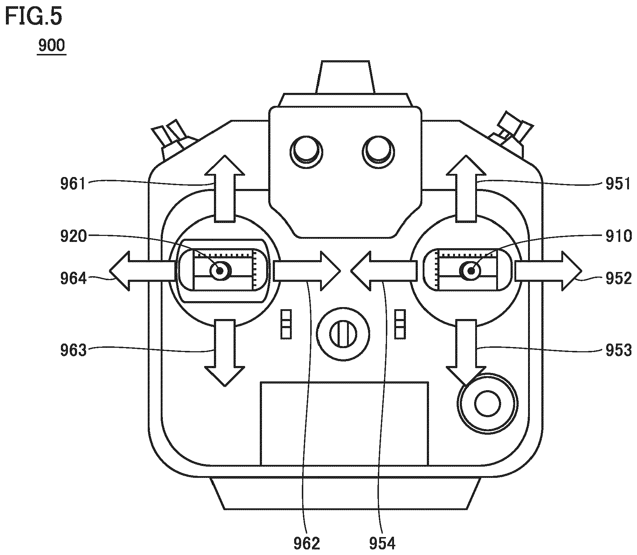

Fig. 5 is a front view of remote controller 900 for an operator to control drone 1. As shown in Fig. 5, remote controller 900 includes control levers 910 and 920. A method of controlling drone 1 includes two types of a "mode 1" and a "mode 2." A case of "mode 1" will be described below.

As the operator tilts control lever 910 in a direction shown with an arrow 951, drone 1 ascends. As the operator tilts control lever 910 in a direction shown with an arrow 952, drone 1 moves to the right when viewed from the operator. As the operator tilts control lever 910 in a direction shown with an arrow 953, drone 1 descends. As the operator tilts control lever 910 in a direction shown with an arrow 954, drone 1 moves to the left when viewed from the operator.

As the operator tilts control lever 920 in a direction shown with an arrow 961, drone 1 travels forward. As the operator tilts control lever 920 in a direction shown with an arrow 962, drone 1 turns to the right. As the operator tilts control lever 920 in a direction shown with an arrow 963, drone 1 travels rearward. As the operator tilts control lever 920 in a direction shown with an arrow 964, drone 1 turns to the left.

<D. Setting of Flight Envelope>

A technique to set a flight envelope will now be described. Specifically, a technique to set a reference range (a range indicated by a threshold value) determined for a flight state will be described. Setting of a threshold value of a resultant acceleration in the directions along the three axes, setting of a threshold value of the angular velocity, and setting of a threshold value of the attitude angle will be described by way of example. The resultant acceleration is calculated in an expression (1) below, where X, Y, and Z represent the accelerations along the three axes, respectively.
[Math. 1]

$$Resultant\ Acceleration\ = \sqrt{X^2 + Y^2 + Z^2} \cdots (1)$$

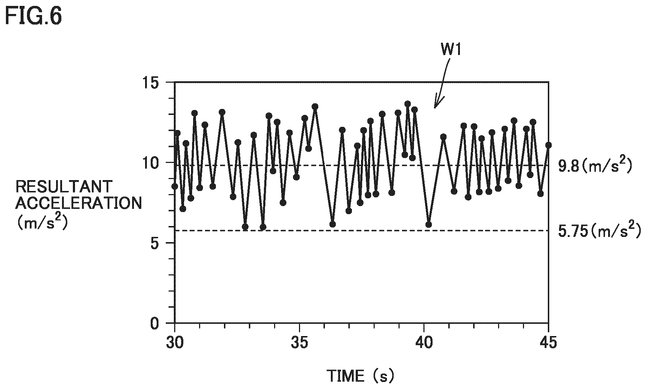

Fig. 6 is a diagram for illustrating setting of the threshold value of the resultant acceleration. The operator operates control lever 910 of remote controller 900 to repeatedly move drone 1 in a vertical direction (an upward-downward direction). Specifically, the operator alternately repeats an operation to tilt control lever 910 in the direction shown with arrow 951 and an operation to tilt control lever 910 in the direction shown with arrow 953. In the present example, the operator operates control lever 910 by an amount of operation at a prescribed ratio (for example, approximately 70 percent) to a maximum amount of operation in the directions shown with arrows 951 and 953.

In this case, inertial apparatus 142 obtains a waveform W1 of the resultant acceleration as shown in Fig. 6. Waveform W1 is shown, with the abscissa representing time and the ordinate representing the resultant acceleration. Waveform W1 sways up and down around points where the resultant acceleration attains to 9.8 m/s$^2$. In consideration only of the vertical direction (a Z-axis direction), a state at the resultant acceleration of 9.8 m/s$^2$ represents a state in which the acceleration in a vertically upward direction and the acceleration (gravity) in a vertically downward direction are balanced. The state at the resultant acceleration of 9.8 m/s$^2$ represents a state in which force to have drone 1 ascend and force to have drone 1 descend are balanced.

A value "5.75 m/s$^2$" on the ordinate of waveform W1 represents a lower limit value (minimum value) of the resultant acceleration. Specifically, "5.75 m/s$^2$" represents the lower limit value of the resultant acceleration measured by inertial apparatus 142 in normal operations. In the state at the resultant acceleration of 5.75 m/s$^2$, drone 1 descends at 4.05 m/s$^2$ which is a difference from 9.8 m/s$^2$.

The lower limit value of waveform W1 is defined as a lower limit value of the flight envelope of the resultant acceleration. In other words, the lower limit value serves as the threshold value for classification into a flight state that satisfies the flight envelope and a flight state that does not satisfy the flight envelope. The resultant acceleration lower than 5.75 m/s$^2$ indicates deviation from the flight envelope in connection with the resultant acceleration.

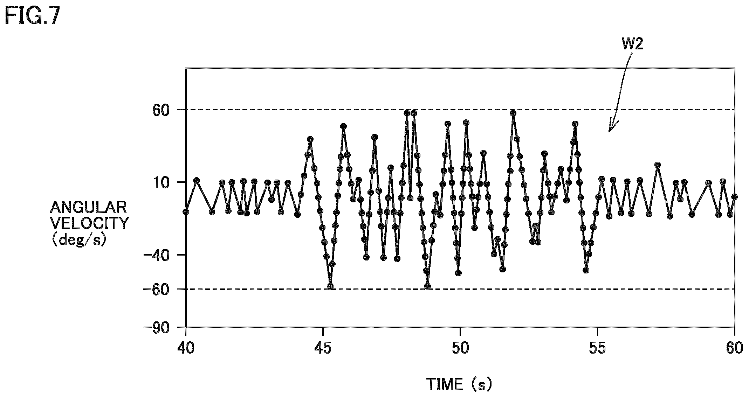

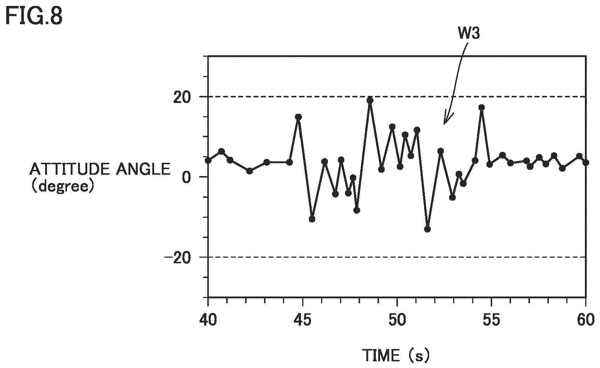

Fig. 7 is a diagram for illustrating setting of the threshold value of the angular velocity (the roll angular velocity in the present example). Fig. 8 is a diagram for illustrating setting of the threshold value of the attitude angle (the roll angle in the present example).

The operator operates control lever 910 of remote controller 900 to repeatedly move drone 1 in a left-right direction. Specifically, the operator alternately repeats the operation to tilt control lever 910 in the direction shown with arrow 952 and the operation to tilt control lever 910 in the direction shown with arrow 954. In the present example, the operator operates control lever 910 by an amount of operation at a prescribed ratio (for example, approximately 70 percent) to a maximum amount of operation in the directions shown with arrows 952 and 954.

In this case, inertial apparatus 142 obtains a waveform W2 in connection with the angular velocity as shown in Fig. 7 and a waveform W3 in connection with the attitude angle as shown in Fig. 8.

As shown in Fig. 7, a value "60 deg/s" on the ordinate of waveform W2 represents an upper limit value (maximum value) of the angular velocity. Specifically, the value represents the upper limit value of the angular velocity measured by inertial apparatus 142 in normal operations. The upper limit value of waveform W2 is defined as an upper limit value of the flight envelope of the angular velocity (the angular velocity around the X axis in the present example). In other words, the upper limit value serves as the threshold value for classification into the flight state that satisfies the flight envelope and the flight state that does not satisfy the flight envelope. The angular velocity higher than 60 deg/s indicates deviation from the flight envelope in connection with the angular velocity.

Similarly, a value "-60 deg/s" on the ordinate of waveform W2 represents a lower limit value (minimum value) of the angular velocity. Specifically, the value represents the lower limit value of the angular velocity measured by inertial apparatus 142 in normal operations. The lower limit value of waveform W2 is defined as a lower limit value of the flight envelope of the angular velocity (the roll angular velocity in the present example). In other words, the lower limit value serves as the threshold value for classification into the flight state that satisfies the flight envelope and the flight state that does not satisfy the flight envelope. The angular velocity lower than -60 deg/s indicates deviation from the flight envelope in connection with the angular velocity.

The range of the flight envelope of the roll angular velocity is thus set to a range not smaller than -60 deg/s and not larger than 60 deg/s. The range of the flight envelope of the pitch angular velocity is also set with a similar technique. Without being limited as such, in consideration of a geometry of drone 1, the range of the flight envelope of the pitch angular velocity may be the same as the range of the flight envelope of the roll angular velocity.

As shown in Fig. 8, a value "20.4 deg" on the ordinate of waveform W3 represents an upper limit value (maximum value) of the attitude angle. Specifically, "20.4 deg" represents the upper limit value of the attitude angle measured by inertial apparatus 142 in normal operations. The upper limit value of waveform W3 is defined as an upper limit value of the flight envelope of the angular velocity (the roll angle in the present example). In other words, the upper limit value serves as the threshold value for classification into the flight state that satisfies the flight envelope and the flight state that does not satisfy the flight envelope. The attitude angle larger than 20.4 deg indicates deviation from the flight envelope in connection with the attitude angle.

Similarly, a value "-15.0 deg" on the ordinate of waveform W3 represents a lower limit value (minimum value) of the attitude angle. Specifically, "-15.0 deg" represents the lower limit value of the attitude angle (the roll angle in the present example) measured by inertial apparatus 142 in normal operations. Based on symmetry of the geometry of drone 1, however, in the present example, the lower limit value of the attitude angle is set to a value (that is, "-20.4 deg") calculated by multiplying the upper limit value of the attitude angle by "-1". The lower limit value serves as the threshold value for classification into the flight state that satisfies the flight envelope and the flight state that does not satisfy the flight envelope. The attitude angle smaller than -20.4 deg indicates deviation from the flight envelope in connection with the attitude angle.

The range of the flight envelope of the attitude angle (the roll angle in the present example) is thus set to a range not smaller than -20.4 deg and not larger than 20.4 deg. The range of the flight envelope of the pitch angle is also set with a similar technique. Without being limited as such, in consideration of the geometry of drone 1, the range of the flight envelope of the pitch angle may be the same as the range of the flight envelope of the roll angle.

Furthermore, the range of the flight envelope in connection with variation in altitude per time of drone 1 is set based on control of drone 1 as above and analysis of the waveforms obtained under such control. Specifically, MCU 141 sets the range of the flight envelope in connection with variation in altitude, based on a result of detection (altitude) by pressure altimeter 143. MCU 141 may be configured to set the range of the flight envelope in connection with variation in altitude based on a result of detection by accelerometer 1422.

For the sake of convenience of description, description will be given below with attention being paid to the flight envelope of the resultant acceleration described with reference to Fig. 6 among the plurality of flight envelopes described above.

<E. Determination Processing with the Use of Function>

Function Va(x) and function Vb(t) stored in memory 1411 are functions relating to the resultant acceleration in the present example. Function Va(x) and function Vb(t) will be described below and thereafter control with the use of function Va(x) and function Vb(t) will be described.

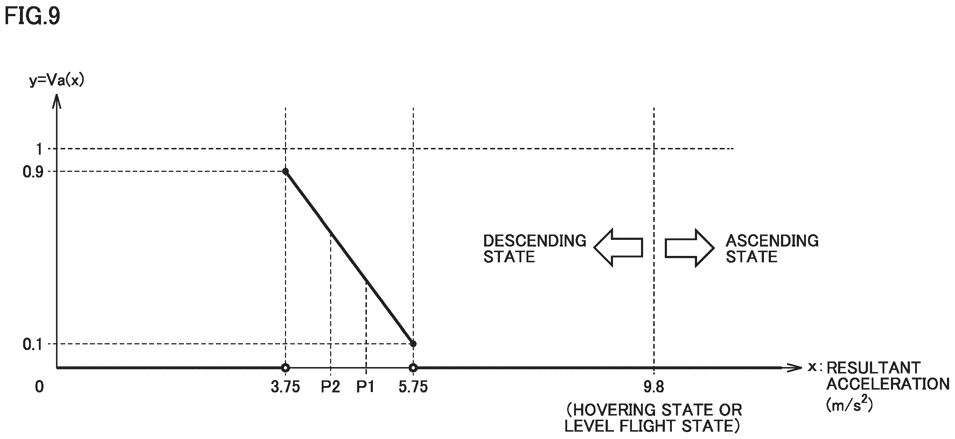

Fig. 9 is a diagram showing function Va(x). As shown in Fig. 9, function Va(x) is a function in which the flight state (specifically, the resultant acceleration) of drone 1 is expressed by an independent variable (that is, x) and a value of a dependent variable (that is, y) thereof is in proportion to a degree of deviation of the flight state from the reference range (flight envelope) determined for the flight state. A range of the value of the dependent variable of function Va(x) is not smaller than 0 and smaller than 1. In other words, the value of the dependent variable of function Va(x) is not equal to or larger than 1.

Specifically, function Va(x) is a membership function. The membership function is expansion of a concept of a characteristic function to a fuzzy set. In function Va(x), in a range of x not smaller than $3.75 \text{ m/s}^2$ and not larger than $5.75 \text{ m/s}^2$, a value of y is in proportion to the degree of deviation of the flight state from the flight envelope. The value "$3.75 \text{ m/s}^2$" is a value calculated by subtracting a value (approximately 2.0) half a difference between $9.8 \text{ m/s}^2$ and $5.75 \text{ m/s}^2$ from $5.75 \text{ m/s}^2$.

The value "$5.75 \text{ m/s}^2$" is the lower limit value of the resultant acceleration described with reference to Fig. 6. In function Va(x), the value of the function at the time when the resultant acceleration is $5.75 \text{ m/s}^2$ is 0.1. The value of the function at the time when the resultant acceleration is $3.75 \text{ m/s}^2$ is 0.9.

Specifically, function Va(x) is expressed in an expression (2) and an expression (3) below.

$$Va(x) = -0.4x + 2.4 \ (3.75 \le x \le 5.75) \qquad \ldots (2)$$

$$Va(x) = 0 \ (x < 3.75, \ 5.75 < x) \qquad \ldots (3)$$

In the range of x not smaller than 3.75 m/s$^2$ and not larger than 5.75 m/s$^2$, the value of y increases to the degree of deviation (a difference between x and 5.75) of the flight state from the flight envelope. For example, the value of y at the time when x has a value x = P2 ($3.75 \le P2 < P1$) is larger than the value of y at the time when x has a value x = P1 ($P1 \le 5.75$).

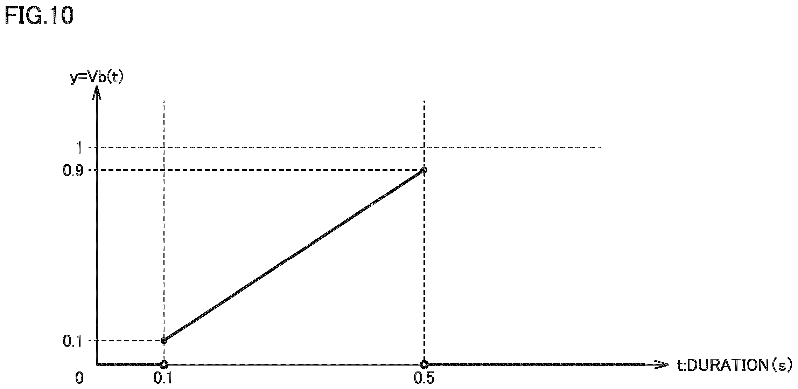

Fig. 10 is a diagram showing function Vb(t). As shown in Fig. 10, function Vb(t) is a function in which a duration of deviation from the flight envelope is expressed as an independent variable (x) and a value of the dependent variable (y) thereof is in proportion to the duration. The range of the value of the dependent variable of function Vb(t) is not smaller than 0 and smaller than 1. In other words, the value of the dependent variable of function Vb(t) is not equal to or larger than 1.

Specifically, function Vb(t) is a membership function. In the range of x not smaller than 0.1 s and not larger than 0.5 s, the value of y is in proportion to the degree of deviation of the flight state from the flight envelope. In function Vb(t), the value of the function at the time when the duration is 0.1 s is 0.1. The value of the function at the time when the duration is 0.5 s is 0.9.

Specifically, function Vb(t) is expressed in an expression (4) and an expression (5) below.

$$Vb(t) = 2t - 0.1 \ (0.1 \le t \le 0.5) \ \ldots (4)$$

$$Vb(t) = 0 \ (t < 0.1, \ 0.5 < t) \qquad \ldots (5)$$

In the range of t not smaller than 0.1 s and not larger than 0.5 s, the value of y increases in proportion to the value of the duration.

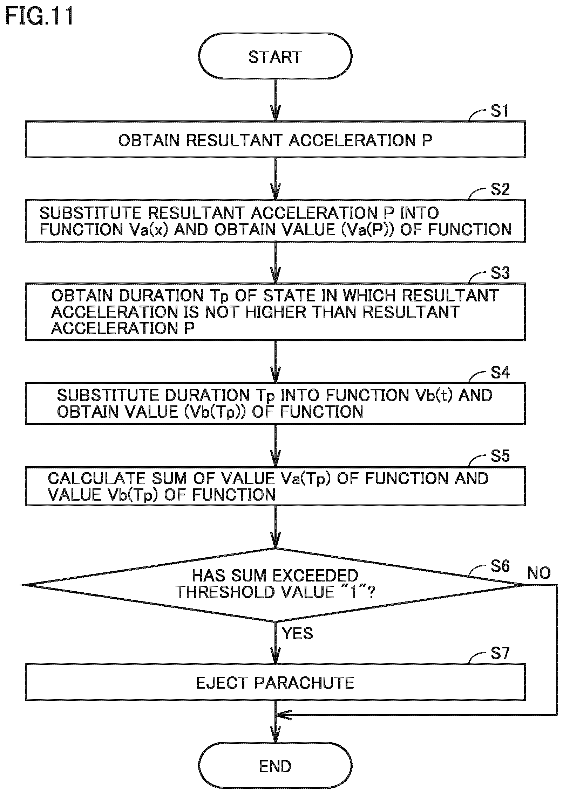

Control with the use of function Va(x) and function Vb(t) will now be described. Fig. 11 is a flowchart for illustrating a flow of processing performed in one aspect. Steps S1 to S7 in Fig. 11 are repeatedly performed every prescribed control cycle (for example, every 0.01 second).

In step S1, MCU 141 of trigger apparatus 14 obtains a resultant acceleration P from inertial apparatus 142. In step S2, MCU 141 substitutes resultant acceleration P as the value of x into function Va(x) to obtain the value (Va(P)) of the function.

For example, when MCU 141 obtains a resultant acceleration P1 in step S1, it obtains the value (Va(P1)) of the function in step S2. Va(P1) is a value not smaller than 0.1 and smaller than 0.9. When MCU 141 obtains a resultant acceleration P2 in step S1, it obtains the value (Va(P2)) of the function in step S2. Va(P1) is a value larger than 0.1 and not larger than 0.9.

In step S3, MCU 141 obtains a duration Tp of a state in which the resultant acceleration is not higher than resultant acceleration P. For example, when a plurality of resultant accelerations different from each other (for example, resultant acceleration P1 and resultant acceleration P2) are obtained in step S1 in different control cycles, MCU 141 individually obtains a duration Tp1 of a state in which the resultant acceleration is not higher than resultant acceleration P1 and a duration Tp2 of a state in which the resultant acceleration is not higher than resultant acceleration P2. MCU 141 thus performs a plurality of timer functions.

For example, when the state at resultant acceleration P1 lasts for a period T1 and the resultant acceleration lowers from P1 to P2 midway through the process, duration Tp1 is at least the sum (summed value) of period T1 and a period T2, with T2 representing a period of the state at resultant acceleration P2.

In step S4, MCU 141 substitutes duration Tp as a value of t into function Vb(t) to obtain the value (Vb(Tp)) of the function. When resultant acceleration P1 and resultant acceleration P2 are obtained in step S1 in different control cycles as above, MCU 141 individually obtains the value (Vb(Tp1)) of the function at the time when duration Tp1 is substituted into function Vb(t) and the value (Vb(Tp2)) of the function at the time when duration Tp2 is substituted into function Vb(t).

In step S5, MCU 141 calculates the sum of function Va(P) and function Vb(Tp). In the example above, MCU 141 calculates the sum of function Va(P1) and function Vb(Tp1) and the sum of function Va(P2) and function Vb(Tp2).

In step S6, MCU 141 determines whether or not the sum of function Va(P) and function Vb(Tp) has exceeded 1 which is the threshold value. In the example above, MCU 141 individually determines whether or not the sum of function Va(P1) and function Vb(Tp1) has exceeded 1 and whether or not the sum of function Va(P2) and function Vb(Tp2) has exceeded 1.

When the sum of function Va(P) and function Vb(Tp) exceeds 1 which is the threshold value (YES in step S6), MCU 141 has ejection apparatus 5 eject parachute 51. When the sum of function Va(P) and function Vb(Tp) does not exceed 1 which is the threshold value (NO in step S6), MCU 141 makes transition to the next control cycle and performs step S1 again.

<F. Summary>

Drone 1 is summarized as below.

[1] Drone 1 includes inertial apparatus 142 that detects the flight state of drone 1, ejection apparatus 5 that includes parachute 51 and can eject parachute 51, and MCU (controller) 141 that determines whether or not parachute 51 should be ejected based on the degree of deviation of the flight state from the reference range (that is, the flight envelope) determined for the flight state and the duration for which the state of deviation equal to or more than the degree of deviation lasts.

According to such a configuration, drone 1 determines whether or not parachute 51 should be ejected in consideration of both of the degree of deviation and the duration for which the state of deviation equal to or more than the degree of deviation lasts. Therefore, according to drone 1, the parachute can be ejected at appropriate timing.

[2] MCU 141 stores function $Va(x)$ and function $Vb(t)$. Function $Va(x)$ is the function in which the flight state is expressed by the independent variable and the value of the dependent variable is in proportion to the degree of deviation of the flight state from the flight envelope. Function $Vb(t)$ is the function in which the duration of deviation is expressed by the independent variable and the value of the dependent variable is in proportion to the duration.

When MCU 141 determines that the total value of the value of the dependent variable of function $Va(x)$ and the value of the dependent variable of function $Vb(t)$ during the flight of drone 1 has exceeded the predetermined threshold value (1 in the present example), MCU 141 has ejection apparatus 5 eject parachute 51.

According to such a configuration, whether or not parachute 51 should be ejected can be determined based on the degree of deviation from the flight envelope and the duration for which the state of deviation equal to or more than the degree of deviation lasts, and parachute 51 can be ejected based on a result of determination. Thus, control as below is specifically enabled.

- Though the degree of deviation from the flight envelope is minor, parachute 51 is ejected because the duration of deviation at such a degree is long.
- Though the degree of deviation from the flight envelope is not so high, parachute 51 is ejected because the duration of deviation at such a degree is long to some extent.
- Though the duration of deviation is short, parachute 51 is ejected because the degree of deviation from the flight envelope is high.

[3] In one aspect, when MCU 141 determines based on the result of detection by inertial apparatus 142 that the flight state has made transition from the stable flight state within the flight envelope (reference range) to the first deviated flight state (for example, the state at resultant acceleration P1 shown in Fig. 9), MCU 141 calculates the first total value of the value $(Va(P1))$ of the dependent variable of function $Va(x)$ based on the first deviated flight state and the value $(Vb(Tp1))$ of the dependent variable of function $Vb(t)$ based on duration Tp for which the state of deviation equal to or more than the degree of deviation in the first deviated flight state lasts. When the first total value exceeds the threshold value (1 in the present example), MCU 141 has ejection apparatus 5 eject parachute 51.

[4] In another aspect, when MCU 141 determines based on the result of detection by inertial apparatus 142 that the flight state has further made transition from the first deviated flight state to the second deviated flight state (for example, the state at resultant acceleration P2 shown in Fig. 9) that more greatly deviates from the flight envelope than the first deviated flight state, MCU 141 performs processing below.

MCU 141 calculates again the first total value described above. Furthermore, MCU 141 calculates the second total value of the value $(Va(P2))$ of the dependent variable of function $Va(x)$ based on the second deviated flight state and the value $(Vb(Tp2))$ of the dependent variable of function $Vb(t)$ based on the duration $(Tp2)$ for which the state of deviation equal to or more than the degree of deviation of the second deviated flight state lasts.

When at least one of the first total value and the second total value exceeds the threshold value (1 in the present example), MCU 141 has ejection apparatus 5 eject parachute 51.

[5] Though the aspect of transition of the flight state from the stable flight state to the first deviated flight state and the aspect of transition of the flight state from the stable flight state via the first deviated flight state to the second deviated flight state are described above by way of example, limitation as such is not intended.

When the flight state successively increases in degree of deviation such as the first deviated flight state, the second deviated flight state, ..., and an nth deviated flight state (n being a natural number not smaller than 3), MCU 141 performs processing below. k is defined as any natural number not smaller than 3 and not larger than n below.

When MCU 141 determines that the flight state has further made transition from a k-1th deviated flight state to a kth deviated flight state that more greatly deviates from the flight envelope than the k-1th deviated flight state, MCU 141 calculates a kth total value of the value of the dependent variable of function Va(x) based on the kth deviated flight state and the value of the dependent variable of function Vb(t) based on the duration for which the state of deviation equal to or more than the degree of deviation of the kth deviated flight state lasts. Furthermore, when the flight state has made transition from the first deviated flight state to an nth deviated flight state such that the degree of deviation successively increases and then at least one of n total values from the first total value to an nth total value exceeds the threshold value, MCU 141 has ejection apparatus 5 eject parachute 51.

[6] Function Va(x) and function Vb(t) are membership functions. The threshold value is set to 1. The range of the value of the dependent variable of function Va(x) is not smaller than 0 and smaller than 1. The range of the value of the dependent variable of function Vb(t) is not smaller than 0 and smaller than 1. According to such a configuration, each of the value of function Va(x) alone and the value of function Va(x) alone does not exceed 1. Therefore, in drone 1, ejection of parachute 51 based only on the degree of deviation from the flight envelope and ejection of parachute 51 based only on the duration of deviation can be prevented.

<G. Modification>

(1) An exemplary flight state is described above with reference to the resultant acceleration of drone 1. Limitation thereto, however, is not intended. The flight state may be represented by any of variation in altitude per time of drone 1, the roll angle of drone 1, the roll angular velocity of drone 1, the pitch angle of drone 1, the pitch angular velocity of drone 1, and the yaw angular velocity of drone 1.

Whether or not to eject parachute 51 is preferably determined for each flight state based on a set (pair) of (i) the first function in which the flight state is expressed by the independent variable and the value of the dependent variable is in proportion to the degree of deviation of the flight state from the reference range (flight envelope) determined for the flight state and (ii) the second function in which the duration of deviation is expressed by as the independent variable and the value of the dependent variable is in proportion to the duration.

(2) In the above, MCU 141 of trigger apparatus 14 determines whether or not to eject parachute 51 from ejection apparatus 5 based on function Va(x) and function Vb(t). Limitation thereto, however, is not intended. MCU 81 of flight controller 8 may store function Va(x) and function Vb(t) and flight controller 8 in place of trigger apparatus 14 may determine whether or not to eject parachute 51 from ejection apparatus 5 based on function Va(x) and function Vb(t).

(3) MCU 141 of trigger apparatus 14 may calculate the resultant acceleration and the velocity based on a detection value from pressure altimeter 143.

These three modifications (1) to (3) are applied also to a drone in a second embodiment which will be described later.

[Second Embodiment]

In the present embodiment, a configuration in which an amount of computation by MCU 141 can be smaller than in the first embodiment will be described. In the present embodiment, differences from the first embodiment will be described and identical points will not repeatedly be described.

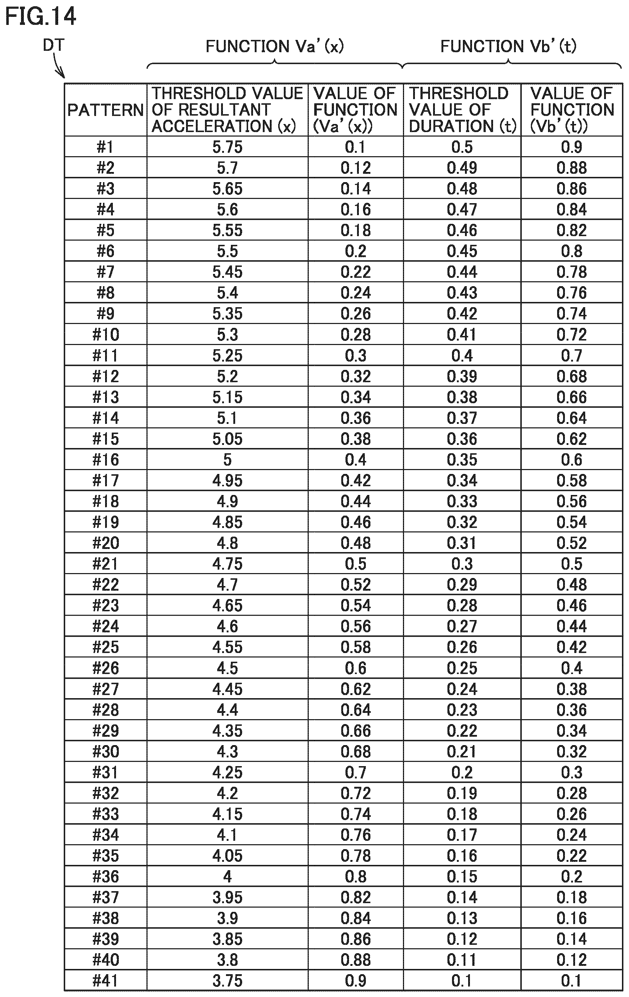

In the present embodiment, a function Va'(x) instead of function Va(x) is stored. A function Vb'(t) instead of function Vb(t) is stored. Specifically, a data table DT (Fig. 14) is stored in memory 1411. Function Va'(x) and function Vb'(t) are included in data table DT.

Functions Va'(x) and Vb'(t) and data table DT will initially be described below. Determination processing based on functions Va'(x) and Vb'(t) and data table DT will then be described.

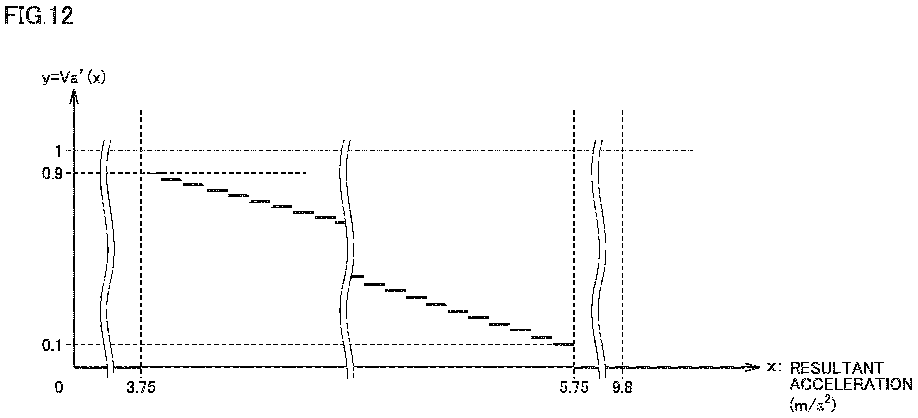

Fig. 12 is a diagram showing function Va'(x). As shown in Fig. 12, similarly to function Va(x) in the first embodiment, function Va'(x) is a function in which the flight state (specifically, the resultant acceleration) of drone 1 is expressed by the independent variable (that is, x) and the value of the dependent variable (that is, y) is in proportion to the degree of deviation of the flight state from the reference range (flight envelope) determined for the flight state. In the present embodiment again, the range of the value of the dependent variable of function Va'(x) is not smaller than 0 and smaller than 1. In other words, the value of the dependent variable of function Va'(x) is not equal to or larger than 1.

Specifically, function Va'(x) is a step function. In function Va'(x), in the range of x not smaller than $3.75 \, \text{m/s}^2$ and not larger than $5.75 \, \text{m/s}^2$, the value of y is stepwise in proportion to the degree of deviation of the flight state from the flight envelope. Function Va'(x) is stepwise in the range not smaller than $3.75 \, \text{m/s}^2$ and not larger than $5.75 \, \text{m/s}^2$.

Similarly to function Va(x) in the first embodiment, function Va'(x) has the value of 0.1 at the time when the resultant acceleration is $5.75 \, \text{m/s}^2$ and the value of 0.9 at the time when the resultant acceleration is $3.75 \, \text{m/s}^2$. As

described above, the value "5.75 m/s$^2$" is the lower limit value of the resultant acceleration described with reference to Fig. 6.

In the range of x not smaller than 3.75 m/s$^2$ and not larger than 5.75 m/s$^2$, the value of y increases to the degree of deviation (difference between x and 5.75) of the flight state from the flight envelope. A specific example of the value of the function in the range not smaller than 3.75 m/s$^2$ and not larger than 5.75 m/s$^2$ is shown in data table DT.

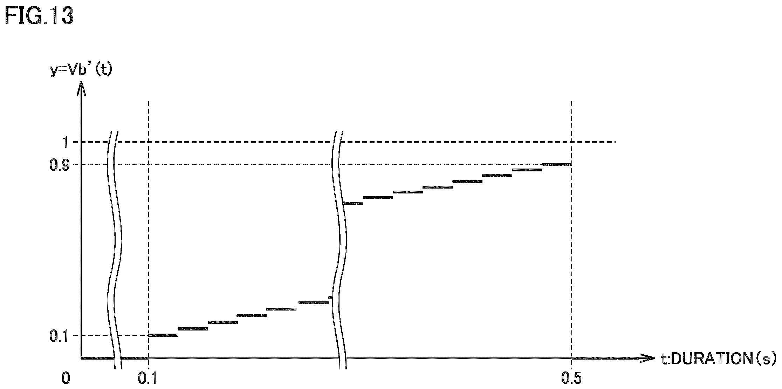

Fig. 13 is a diagram showing function Vb'(t). As shown in Fig. 13, similarly to function Vb(t) in the first embodiment, function Vb'(t) is a function in which the duration of deviation from the flight envelope is expressed by the independent variable (x) and the value of the dependent variable (y) is in proportion to the duration. The range of the value of the dependent variable of function Vb'(t) is not smaller than 0 and smaller than 1. In other words, the value of the dependent variable of function Vb'(t) is not equal to or larger than 1.

Specifically, function Vb'(t) is a step function. In the range of x not smaller than 0.1 s and not larger than 0.5 s, the value of y is stepwise in proportion to the degree of deviation of the flight state from the flight envelope. Function Vb'(t) is stepwise in the range not smaller than 0.1 s and not larger than 0.5 s.

Similarly to function Vb(t) in the first embodiment, function Vb'(t) has the value of 0.1 at the time when the duration is 0.1 s and has the value of 0.9 at the time when the duration is 0.5 s. A specific example of the value of the function in the range not smaller than 0.1 s and not larger than 0.5 s is shown in data table DT.

Fig. 14 is a diagram showing data table DT. As shown in Fig. 14, data table DT includes function Va'(x) and function Vb'(t).

Specifically, data table DT includes for function Va'(x), the threshold value of each resultant acceleration (x) in the range not smaller than 3.75 m/s$^2$ and not larger than 5.75 m/s$^2$ and the value (Va'(x)) of the function corresponding to each resultant acceleration (x). In the present example, the resultant acceleration (x) is set in decrements of 0.05 m/s$^2$.

Data table DT includes for function Vb'(t), the threshold value of the duration (t) in the range not smaller than 0.1 s and not larger than 0.5 s and the value (Vb'(t)) of the function corresponding to each duration (t). In the present example, the duration (t) is set in decrements of 0.01 s.

In data table DT, as shown with patterns #1 to #41, the sum of (Va'(x)) and the value (Vb'(t)) of the function is calculated as 1. A plurality of combinations of the threshold value of the resultant acceleration (x) and the threshold value of the duration (t) are stored.

MCU 141 determines whether or not parachute 51 should be ejected by referring to data table DT. Specifically, MCU 141 determines whether or not parachute 51 should be ejected by referring to the plurality of combinations of the threshold value of the resultant acceleration (x) and the threshold value of the duration (t) shown as patterns #1 to #41.

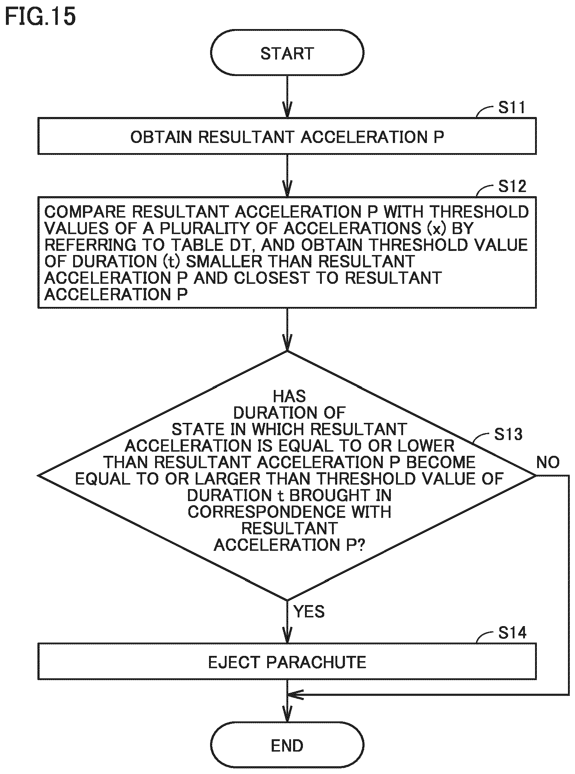

Fig. 15 is a flowchart for illustrating a flow of processing performed in one aspect. Steps S11 to S14 in Fig. 15 are repeatedly performed every prescribed control cycle (for example, every 0.01 second).

In step S11, MCU 141 of trigger apparatus 14 obtains resultant acceleration P from inertial apparatus 142. In step S12, MCU 141 compares resultant acceleration P with the threshold values of a plurality of resultant accelerations (x) by referring to data table DT, and obtains the threshold value of the duration (t) smaller than resultant acceleration P and closest to resultant acceleration P.

For example, when MCU 141 obtains in step S1, 5.75 m/s$^2$ (which is also referred to as a "resultant acceleration P3" below) as the resultant acceleration (x), in step S2, it obtains 0.5 s (which is also referred to as a "threshold value Tp3" below) as the threshold value of the duration (t) as shown with pattern #1. Similarly, when MCU 141 obtains in step S1, 5.73 m/s$^2$ as the resultant acceleration (x), in step S2, it obtains 0.5 s (threshold value Tp3) as the threshold value of the duration (t) as shown with pattern #1.

When MCU 141 obtains in step S1, 5.7 m/s$^2$ (which is also referred to as a "resultant acceleration P4" below) as the resultant acceleration (x), in step S2, it obtains 0.49 s (which is also referred to as a "threshold value Tp4" below) as the threshold value of the duration (t) as shown with pattern #2. Similarly, when MCU 141 obtains in step S1, 5.68 m/s$^2$ as the resultant acceleration (x), in step S2, it obtains 0.46 s (threshold value Tp4) as the threshold value of the duration (t) as shown with pattern #2.

In step S13, MCU 141 determines whether or not the duration of the state in which the resultant acceleration is not higher than resultant acceleration P has become equal to or larger than the threshold value of duration t brought in correspondence with resultant acceleration P. For example, when MCU 141 obtains resultant acceleration P3 in step S11, it determines whether or not the duration of the state in which the resultant acceleration is not higher than resultant acceleration P3 is equal to or larger than threshold value Tp3 of duration t brought in correspondence with resultant acceleration P3.

When MCU 141 consecutively obtains resultant acceleration P3 in step S11 over at least one control cycle and thereafter consecutively obtains resultant acceleration P4 in step S11 over at least one control cycle, it performs processing below. Specifically, MCU 141 determines whether or not the duration of the state in which the resultant acceleration is not higher than resultant acceleration P3 has become equal to or larger than threshold value Tp3 of duration t brought in correspondence with resultant acceleration P3 and whether or not the duration of the state in which the resultant acceleration is not higher than resultant acceleration P4 has become equal to or larger than threshold value Tp4 of duration t brought in correspondence with resultant acceleration P4.

When positive determination is made in step S13 (YES in step S13), in step S14, MCU 141 has ejection apparatus 5 eject parachute 51 by sending a command to trigger apparatus 14. When negative determination is made in step S13 (NO in step S13), MCU 141 makes transition to the next control cycle and performs step S11 again.

Only transition from resultant acceleration P3 to resultant acceleration P4 is shown above for the sake of simplification of description. For example, when transition to resultant acceleration P4 is made and thereafter transition to a resultant acceleration P5 that is lower than resultant acceleration P4 and corresponds to pattern #3 or later is made, determination processing based on the duration is performed for each of three resultant accelerations P3, P4, and P5. Determination based on the duration is thus made for each pattern (each classification) shown in Fig. 15.

<Summary>

Drone 1 according to the present embodiment is summarized as below.

[1] As in the first embodiment, drone 1 includes inertial apparatus 142 that detects the flight state of drone 1, ejection apparatus 5 that includes parachute 51 and can eject parachute 51, and MCU (controller) 141 that determines whether or not parachute 51 should be ejected based on the degree of deviation of the flight state from the reference range (that is, the flight envelope) determined for the flight state and the duration for which the state of deviation equal to or more than the degree of deviation lasts.

[2] MCU 141 stores function Va'(x) and function Vb'(t). Function Va'(x) is a function in which the flight state is expressed by the independent variable and the value of the dependent variable is in proportion to the degree of deviation of the flight state from the flight envelope. Function Vb'(t) is a function in which the duration of deviation is expressed by the independent variable and the value of the dependent variable is in proportion to the duration.

When MCU 141 determines that the total value of the value of the dependent variable of function Va'(x) during the flight of drone 1 and the value of the dependent variable of function Vb'(t) has exceeded the predetermined threshold value (1 in the present example), it has ejection apparatus 5 eject parachute 51.

According to such a configuration, whether or not parachute 51 should be ejected can be determined based on the degree of deviation from the flight envelope and the duration for which the state of deviation equal to or more than the degree of deviation lasts, and parachute 51 can be ejected based on a result of determination.

[3] Function Va'(x) and function Vb'(t) are step functions. As shown in data table DT, MCU 141 stores in advance a first duration (for example, the threshold value of 0.5 second) of deviation for which the total value of the value (for example, 0.1) of the dependent variable of function Va'(x) based on the first deviated flight state (for example, resultant acceleration of 5.75 m/s$^2$) that deviates from the flight envelope (reference range) among the plurality of flight states and the value of the dependent variable of function Vb'(t) has reached the threshold value (1 in the present example), in association with the first deviated flight state.

In one aspect, when the flight state has made transition from the stable flight state within the flight envelope to the first deviated flight state (for example, the resultant acceleration of 5.75 m/s$^2$) and then the duration for which the deviated state equal to or more than the degree of deviation of the first deviated flight state lasts exceeds the first duration (for example, 0.5 second), MCU 141 has ejection apparatus 5 eject parachute 51.

[4] MCU 141 stores a second duration (for example, the threshold value of 0.49 second) of deviation for which the total value of the value (for example, 0.12) of the dependent variable of function Va'(x) based on the second deviated flight state (for example, resultant acceleration of 5.7 m/s$^2$) that more greatly deviates from the flight envelope than the first deviated flight state among the plurality of flight states and the value of the dependent variable of function Vb'(t) has reached the threshold value (1 in the present example), in association with the second deviated flight state.

In one aspect, when the flight state has made transition from the first deviated flight state to the second deviated flight state and then any one of a first condition and a second condition below is satisfied, MCU 141 has ejection apparatus 5 eject parachute 51. The first condition is that the duration for which the state of deviation equal to or more than the degree of deviation of the first deviated flight state lasts exceeds the first duration (the threshold value of 0.5 second). The second condition is that the duration for which the state of deviation equal to or more than the degree of deviation of the second deviated flight state lasts exceeds the second duration (the threshold value of 0.49 second).

According to such a configuration as well, as in the first embodiment, whether or not parachute 51 should be ejected can be determined based on the degree of deviation from the flight envelope and the duration for which the state of deviation equal to or more than the degree of deviation lasts, and parachute 51 can be ejected based on a result of determination.

Furthermore, the threshold value of the duration (t) is brought in correspondence with each threshold value of the resultant acceleration (x). Therefore, the sum of the value of the dependent variable of function Va'(x) (the value of the function) and the value of the dependent variable of function Vb'(t) (the value of the function) does not have to be calculated each time. Therefore, an amount of computation processing in MCU 141 can be smaller than in the first embodiment.

[5] Though the aspect in which the flight state makes transition from the stable flight state to the first deviated flight state and the aspect in which the flight state makes transition from the stable flight state via the first deviated flight state to the second deviated flight state are described above by way of example, limitation as such is not intended. In the following, n is defined as a natural number not smaller than 3 and k is defined as any natural number not smaller than 3 and not larger than n.

MCU 141 stores a kth duration of deviation for which the total value of the value of the dependent variable of function Va'(x) based on the kth deviated flight state that more greatly deviates from the flight envelope than the k-1 deviated flight state among the plurality of flight states and the value of the dependent variable of function Vb'(t) has reached the threshold value, in association with the kth deviated flight state. When the flight state has made transition from the first deviated flight state to the nth deviated flight state such that the degree of deviation successively increases and then any one of the first condition to an nth condition is satisfied, MCU 141 has ejection apparatus 5 eject parachute 51.

As described above, the first condition is that the duration for which the state of deviation equal to or more than the degree of deviation of the first deviated flight state lasts exceeds the first duration. As described above, the second condition is that the duration for which the state of deviation equal to or more than the degree of deviation of the second deviated flight state lasts exceeds the second duration. The kth condition (the third condition to the nth condition) is that the duration for which the state of deviation equal to or more than the degree of deviation of the kth deviated flight state lasts exceeds the kth duration.

<Additional Aspects>

(1) An aerial vehicle includes

a sensor device that detects a flight state of the aerial vehicle,
a controller that stores a first function and a second function, and
an ejection apparatus that includes a parachute and can eject the parachute,
the first function is a function in which the flight state is expressed by an independent variable and a value of a dependent variable is in proportion to a degree of deviation of the flight state from a reference range determined for the flight state,
the second function is a function in which a duration of the deviation is expressed by an independent variable and a value of a dependent variable is in proportion to the duration, and
when the controller determines that a total value of the value of the dependent variable of the first function and the value of the dependent variable of the second function during a flight of the aerial vehicle has exceeded a predetermined threshold value, the controller controls the ejection apparatus to eject the parachute.

(2) A method of controlling an aerial vehicle that can eject a parachute,

the aerial vehicle storing a first function and a second function, the first function being a function in which a flight state of the aerial vehicle is expressed by an independent variable and a value of a dependent variable is in proportion to a degree of deviation of the flight state from a reference range determined for the flight state, the second function being a function in which a duration of the deviation is expressed by an independent variable and a value of a dependent variable is in proportion to the duration, includes
detecting a flight state of the aerial vehicle, and
ejecting the parachute when it is determined that a total value of the value of the dependent variable of the first function and the value of the dependent variable of the second function during a flight of the aerial vehicle has exceeded a predetermined threshold value.

The embodiment disclosed herein is illustrative and not restricted only to contents above. The scope of the present invention is defined by the terms of the claims and is intended to include any modifications within the scope and meaning equivalent to the terms of the claims.

REFERENCE SIGNS LIST

1 drone; 2 main body; 3A, 3B, 3C, 3D arm; 4A, 4B, 4C, 4D propulsive mechanism; 5 ejection apparatus; 6 communication unit; 7A, 7B, 7C, 7D drive apparatus; 8 flight controller; 9, 13 battery; 10 power supply module; 12 distributor; 14 trigger apparatus; 15 sensor; 16 GNSS receiver; 18 support member; 41 propeller; 42 motor; 51 parachute;

82, 142 inertial apparatus; 83, 143 pressure altimeter; 900 remote controller; 910, 920 control lever; 1411 memory; 1412 determination unit; 1421 gyro; 1422 accelerometer; 1423 processor; DT data table; W1, W2, W3 waveform.

**Claims**

1. An aerial vehicle comprising:

   a sensor device that detects a flight state of the aerial vehicle;
   an ejection apparatus that includes a parachute and can eject the parachute; and
   a controller that determines whether the parachute should be ejected based on a degree of deviation of the flight state from a reference range determined for the flight state and a duration for which a state of deviation equal to or more than the degree of deviation lasts.

2. The aerial vehicle according to claim 1, wherein

   the controller stores a first function and a second function,
   the first function is a function in which the flight state is expressed by an independent variable and a value of a dependent variable is in proportion to the degree of deviation of the flight state from the reference range,
   the second function is a function in which the duration of the deviation is expressed by an independent variable and a value of a dependent variable is in proportion to the duration, and
   when the controller determines that a total value of the value of the dependent variable of the first function and the value of the dependent variable of the second function during a flight of the aerial vehicle has exceeded a predetermined threshold value, the controller controls the ejection apparatus to eject the parachute.

3. The aerial vehicle according to claim 2, wherein

   when the controller determines that the flight state has made transition from a stable flight state within the reference range to a first deviated flight state that deviates from the reference range, the controller calculates a first total value of the value of the dependent variable of the first function based on the first deviated flight state and the value of the dependent variable of the second function based on the duration for which the state of deviation equal to or more than the degree of deviation in the first deviated flight state lasts, and
   when the first total value exceeds the threshold value, the controller controls the ejection apparatus to eject the parachute.

4. The aerial vehicle according to claim 3, wherein

   when the controller determines that the flight state has further made transition from the first deviated flight state to a second deviated flight state that more greatly deviates from the reference range than the first deviated flight state based on a result of detection by the sensor device, the controller calculates again the first total value and calculates a second total value of the value of the dependent variable of the first function based on the second deviated flight state and the value of the dependent variable of the second function based on the duration for which the state of deviation equal to or more than the degree of deviation of the second deviated flight state lasts, and
   when at least one of the first total value and the second total value exceeds the threshold value, the controller controls the ejection apparatus to eject the parachute.

5. The aerial vehicle according to claim 4, wherein

   with n representing a natural number not smaller than 3 and k representing any natural number not smaller than 3 and not larger than n,
   when the controller determines that the flight state has further made transition from a k-1th deviated flight state to a kth deviated flight state that more greatly deviates from the reference range than the k-1th deviated flight state, the controller calculates a kth total value of the value of the dependent variable of the first function based on the kth deviated flight state and the value of the dependent variable of the second function based on the duration for which the state of deviation equal to or more than the degree of deviation of the kth deviated flight state lasts, and
   when the flight state has made transition from the first deviated flight state to an nth deviated flight state such that the degree of deviation successively increases and then at least one of n total values from the first total value to an nth total value exceeds the threshold value, the controller controls the ejection apparatus to eject the parachute.

6. The aerial vehicle according to any one of claims 2 to 5, wherein

   the first function and the second function are membership functions,
   the threshold value is set to 1,
   a range of the value of the dependent variable of the first function is not smaller than 0 and smaller than 1, and
   a range of the value of the dependent variable of the second function is not smaller than 0 and smaller than 1.

7. The aerial vehicle according to claim 2, wherein

   the first function and the second function are step functions,
   the controller stores in advance a first duration of the deviation for which a total value of the value of the dependent variable of the first function based on a first deviated flight state that deviates from the reference range among a plurality of flight states and the value of the dependent variable of the second function has reached the threshold value, in association with the first deviated flight state, and
   when the flight state has made transition from a stable flight state within the reference range to the first deviated flight state and then the duration for which the state of deviation equal to or more than the degree of deviation of the first deviated flight state lasts exceeds the first duration, the controller controls the ejection apparatus to eject the parachute.

8. The aerial vehicle according to claim 7, wherein

   the controller stores a second duration of the deviation for which a total value of the value of the dependent variable of the first function based on a second deviated flight state that more greatly deviates from the reference range than the first deviated flight state among the plurality of flight states and the value of the dependent variable of the second function has reached the threshold value, in association with the second deviated flight state,
   when the flight state has made transition from the first deviated flight state to the second deviated flight state and then one of a first condition and a second condition is satisfied, the controller controls the ejection apparatus to eject the parachute,
   the first condition is that the duration for which the state of deviation equal to or more than the degree of deviation of the first deviated flight state lasts exceeds the first duration, and
   the second condition is that the duration for which the state of deviation equal to or more than the degree of deviation of the second deviated flight state lasts exceeds the second duration.

9. The aerial vehicle according to claim 8, wherein

   with n representing a natural number not smaller than 3 and k representing any natural number not smaller than 3 and not larger than n,
   the controller stores a kth duration of the deviation for which a total value of the value of the dependent variable of the first function based on a kth deviated flight state that more greatly deviates from the reference range than a k-1th deviated flight state among the plurality of flight states and the value of the dependent variable of the second function has reached the threshold value, in association with the kth deviated flight state,
   when the flight state has made transition from the first deviated flight state to an nth deviated flight state such that the degree of deviation successively increases and then one of the first condition to an nth condition is satisfied, the controller controls the ejection apparatus to eject the parachute, and
   a kth condition is that the duration for which the state of deviation equal to or more than the degree of deviation of the kth deviated flight state lasts exceeds the kth duration.

10. The aerial vehicle according to claim 1, wherein

    the reference range is a flight envelope of the aerial vehicle, and
    the flight state is any of an acceleration of the aerial vehicle, variation in altitude per time of the aerial vehicle, a roll angle of the aerial vehicle, a roll angular velocity of the aerial vehicle, a pitch angle of the aerial vehicle, and a pitch angular velocity of the aerial vehicle.

11. A method of controlling an aerial vehicle that can eject a parachute, the method comprising:

    detecting a flight state of the aerial vehicle; and
    determining whether the parachute should be ejected based on a degree of deviation of the flight state from a reference range determined for the flight state and a duration for which a state of deviation equal to or more than the degree of deviation lasts.

FIG.1

# FIG.2

FIG.3

EP 4 582 345 A1

FIG.4

14

TRIGGER APPARATUS(ATS)

141 MCU

1411 MEMORY

1412 DETERMINATION UNIT

FUNCTION Va(x)

FUNCTION Vb(t)

143 PRESSURE ALTIMETER

142 INERTIAL APPARATUS

1423 PROCESSOR

1421 GYRO

1422 ACCELEROMETER

FIG.5

900

FIG.6

EP 4 582 345 A1

FIG.7

FIG.8

FIG.9

y=Va(x)

DESCENDING STATE ⟸  ⟹ ASCENDING STATE

x : RESULTANT ACCELERATION (m/s²)

3.75  P2  P1  5.75  9.8 (HOVERING STATE OR LEVEL FLIGHT STATE)

EP 4 582 345 A1

FIG.10

EP 4 582 345 A1

FIG.11

```
                    ┌─────────────┐
                    │    START    │
                    └──────┬──────┘
                           │
                           ▼                          ╭─ S1
    ┌──────────────────────────────────────────────────┐
    │        OBTAIN RESULTANT ACCELERATION P            │
    └──────────────────────┬───────────────────────────┘
                           │
                           ▼                          ╭─ S2
    ┌──────────────────────────────────────────────────┐
    │  SUBSTITUTE RESULTANT ACCELERATION P INTO         │
    │  FUNCTION Va(x) AND OBTAIN VALUE (Va(P)) OF        │
    │  FUNCTION                                          │
    └──────────────────────┬───────────────────────────┘
                           │
                           ▼                          ╭─ S3
    ┌──────────────────────────────────────────────────┐
    │  OBTAIN DURATION Tp OF STATE IN WHICH RESULTANT   │
    │  ACCELERATION IS NOT HIGHER THAN RESULTANT        │
    │  ACCELERATION P                                   │
    └──────────────────────┬───────────────────────────┘
                           │
                           ▼                          ╭─ S4
    ┌──────────────────────────────────────────────────┐
    │  SUBSTITUTE DURATION Tp INTO FUNCTION Vb(t) AND   │
    │  OBTAIN VALUE (Vb(Tp)) OF FUNCTION                │
    └──────────────────────┬───────────────────────────┘
                           │
                           ▼                          ╭─ S5
    ┌──────────────────────────────────────────────────┐
    │  CALCULATE SUM OF VALUE Va(Tp) OF FUNCTION AND    │
    │  VALUE Vb(Tp) OF FUNCTION                         │
    └──────────────────────┬───────────────────────────┘
                           │
                           ▼          S6   NO
              ◇ HAS SUM EXCEEDED ◇─────────────┐
              ◇ THRESHOLD VALUE "1"? ◇          │
                           │ YES                │
                           ▼          S7        │
    ┌──────────────────────────────────────┐    │
    │          EJECT PARACHUTE             │    │
    └──────────────────────┬───────────────┘    │
                           │◄───────────────────┘
                           ▼
                    ┌─────────────┐
                    │     END     │
                    └─────────────┘
```

FIG.12

EP 4 582 345 A1

FIG.13

EP 4 582 345 A1

# FIG.14

DT

| PATTERN | FUNCTION Va'(x) | | FUNCTION Vb'(t) | |
|---|---|---|---|---|
| | THRESHOLD VALUE OF RESULTANT ACCELERATION (x) | VALUE OF FUNCTION (Va'(x)) | THRESHOLD VALUE OF DURATION (t) | VALUE OF FUNCTION (Vb'(t)) |
| #1 | 5.75 | 0.1 | 0.5 | 0.9 |
| #2 | 5.7 | 0.12 | 0.49 | 0.88 |
| #3 | 5.65 | 0.14 | 0.48 | 0.86 |
| #4 | 5.6 | 0.16 | 0.47 | 0.84 |
| #5 | 5.55 | 0.18 | 0.46 | 0.82 |
| #6 | 5.5 | 0.2 | 0.45 | 0.8 |
| #7 | 5.45 | 0.22 | 0.44 | 0.78 |
| #8 | 5.4 | 0.24 | 0.43 | 0.76 |
| #9 | 5.35 | 0.26 | 0.42 | 0.74 |
| #10 | 5.3 | 0.28 | 0.41 | 0.72 |
| #11 | 5.25 | 0.3 | 0.4 | 0.7 |
| #12 | 5.2 | 0.32 | 0.39 | 0.68 |
| #13 | 5.15 | 0.34 | 0.38 | 0.66 |
| #14 | 5.1 | 0.36 | 0.37 | 0.64 |
| #15 | 5.05 | 0.38 | 0.36 | 0.62 |
| #16 | 5 | 0.4 | 0.35 | 0.6 |
| #17 | 4.95 | 0.42 | 0.34 | 0.58 |
| #18 | 4.9 | 0.44 | 0.33 | 0.56 |
| #19 | 4.85 | 0.46 | 0.32 | 0.54 |
| #20 | 4.8 | 0.48 | 0.31 | 0.52 |
| #21 | 4.75 | 0.5 | 0.3 | 0.5 |
| #22 | 4.7 | 0.52 | 0.29 | 0.48 |
| #23 | 4.65 | 0.54 | 0.28 | 0.46 |
| #24 | 4.6 | 0.56 | 0.27 | 0.44 |
| #25 | 4.55 | 0.58 | 0.26 | 0.42 |
| #26 | 4.5 | 0.6 | 0.25 | 0.4 |
| #27 | 4.45 | 0.62 | 0.24 | 0.38 |
| #28 | 4.4 | 0.64 | 0.23 | 0.36 |
| #29 | 4.35 | 0.66 | 0.22 | 0.34 |
| #30 | 4.3 | 0.68 | 0.21 | 0.32 |
| #31 | 4.25 | 0.7 | 0.2 | 0.3 |
| #32 | 4.2 | 0.72 | 0.19 | 0.28 |
| #33 | 4.15 | 0.74 | 0.18 | 0.26 |
| #34 | 4.1 | 0.76 | 0.17 | 0.24 |
| #35 | 4.05 | 0.78 | 0.16 | 0.22 |
| #36 | 4 | 0.8 | 0.15 | 0.2 |
| #37 | 3.95 | 0.82 | 0.14 | 0.18 |
| #38 | 3.9 | 0.84 | 0.13 | 0.16 |
| #39 | 3.85 | 0.86 | 0.12 | 0.14 |
| #40 | 3.8 | 0.88 | 0.11 | 0.12 |
| #41 | 3.75 | 0.9 | 0.1 | 0.1 |

FIG.15

```
                    ┌─────────────┐
                    │    START    │
                    └──────┬──────┘
                           │
                           ▼                        ⌐S11
        ┌──────────────────────────────────────────────┐
        │     OBTAIN RESULTANT ACCELERATION P           │
        └──────────────────┬───────────────────────────┘
                           │
                           ▼                        ⌐S12
        ┌──────────────────────────────────────────────┐
        │ COMPARE RESULTANT ACCELERATION P WITH THRESHOLD│
        │ VALUES OF A PLURALITY OF ACCELERATIONS (x) BY │
        │ REFERRING TO TABLE DT, AND OBTAIN THRESHOLD VALUE│
        │ OF DURATION (t) SMALLER THAN RESULTANT        │
        │ ACCELERATION P AND CLOSEST TO RESULTANT       │
        │ ACCELERATION P                                │
        └──────────────────┬───────────────────────────┘
                           │
                           ▼
```

HAS DURATION OF STATE IN WHICH RESULTANT ACCELERATION IS EQUAL TO OR LOWER THAN RESULTANT ACCELERATION P BECOME EQUAL TO OR LARGER THAN THRESHOLD VALUE OF DURATION t BROUGHT IN CORRESPONDENCE WITH RESULTANT ACCELERATION P?  — S13

NO

YES

S14

EJECT PARACHUTE

END

## INTERNATIONAL SEARCH REPORT

| International application No. |
| --- |
| **PCT/JP2023/028429** |

**A. CLASSIFICATION OF SUBJECT MATTER**

*B64D 45/00*(2006.01)i; *B64C 39/02*(2006.01)i; *B64D 17/80*(2006.01)i; *B64U 10/14*(2023.01)i; *B64U 70/83*(2023.01)i; *G05D 1/10*(2006.01)i

FI: B64D45/00 Z; B64D17/80; G05D1/10; B64C39/02; B64U10/14; B64U70/83

According to International Patent Classification (IPC) or to both national classification and IPC

**B. FIELDS SEARCHED**

Minimum documentation searched (classification system followed by classification symbols)

B64D45/00; B64C39/02; B64D17/80; B64U10/14; B64U70/83; G05D1/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | US 2017/0106986 A1 (FLIRTEY HOLDINGS, INC.) 20 April 2017 (2017-04-20) abstract, paragraph [0102], fig. 1-23 | 1, 10-11 |
| Y | | 2-9 |
| X | CN 111587209 A (MINEBEA MITSUMI INC.) 25 August 2020 (2020-08-25) paragraphs [0087]-[0088], fig. 1-20B | 1, 10-11 |
| Y | | 2, 6 |
| Y | WO 2019/207766 A1 (HITACHI LTD) 31 October 2019 (2019-10-31) paragraphs [0032], [0065], fig. 1-17 | 2-9 |
| Y | JP 2021-111017 A (HITACHI LTD) 02 August 2021 (2021-08-02) paragraphs [0195], [0197], fig. 1-30 | 2-9 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 September 2023** | **26 September 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/028429**

| Patent document cited in search report | Publication date (day/month/year) | Patent family member(s) | Publication date (day/month/year) |
|---|---|---|---|
| US 2017/0106986 A1 | 20 April 2017 | WO 2017/066649 A1 paragraphs [0036], [0093], fig. 1-23 EP 3362360 A1 | |
| CN 111587209 A | 25 August 2020 | US 2021/0061464 A1 paragraphs [0127]-[0128], fig. 1-20B WO 2019/139073 A1 | |
| WO 2019/207766 A1 | 31 October 2019 | (Family: none) | |
| JP 2021-111017 A | 02 August 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• US 20170106986 A1